# EUROPEAN PATENT APPLICATION

(11) **EP 3 130 980 A1**
(43) Date of publication of application: **15.02.2017**
(21) Application number: 16183783.6
(22) Date of filing: 11.08.2016
(51) Int. Cl.: G06F 1/16, G06F 3/0488

(54) **PORTABLE APPARATUS AND METHOD FOR DISPLAYING A SCREEN**

(30) Priority: 11.08.2015 KR 20150112988
(71) Applicant: Samsung Electronics Co., Ltd., Suwon-si, Gyeonggi-do 16677 (KR)
(72) Inventor: Oh, Sue Jung, 13603 Gyeonggi-do (KR); Ahn, Eun Ji, 06764 Seoul (KR); Ok, Joon Ho, 03647 Seoul (KR); Lee, Eun Hye, 06617 Seoul (KR); Lim, Dok Shin, 13836 Gyeonggi-do (KR); Lim, Tae Kyeung, 04040 Seoul (KR)
(74) Representative: Jenkins, Richard Gavin

(57) **Abstract**

A portable apparatus and a method for displaying a screen in the portable apparatus are provided. The portable device includes a touch screen, a sensor configured to detect a biometric signal, and a processor configured to control for displaying, on the touch screen, biometric information having a trajectory along one of an hour hand and a minute hand. The biometric information is obtained based on or in relation to the biometric signal in response to a touch detected from the touch screen.

## Description

### PRIORITY

This application claims the benefit of a Korean patent application filed on August 11, 2015 in the Korean Intellectual Property Office and assigned Serial number 10-2015-0112988, the entire disclosure of which is hereby incorporated by reference.

### BACKGROUND OF THE INVENTION

### 1. Field of the Invention

The present disclosure relates to a portable device and a screen displaying method thereof. More particularly, the present disclosure relates to a portable device for displaying biometric information calculated by a touch detected from a touch screen, as a time trajectory and a screen displaying method thereof.

### 2. Background of the Invention

Recently, various services and functions provided from a portable device are diversified gradually and multi-tasking is possible. Types of sensors implemented in a portable device are increased, for example, an illumination sensor, a proximity sensor, an acceleration sensor, a gyro sensor, or an altitude sensor.

A wearable portable device has good portability but it is inconvenient to display a variety of information (for example, service information, function information, or information detected from a sensor) on a small size of screen.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below. Accordingly, an aspect of the present disclosure is to provide an apparatus and method for displaying a screen in a portable device.

In accordance with an aspect of the present disclosure, a portable device is provided. The portable device includes: a touch screen, a sensor configured for detecting a biometric signal, and a processor configured to control for displaying, on the touch screen, biometric information having a trajectory along one of an hour hand and a minute hand, and obtaining biometric information based on or in relation to the biometric signal in response to a touch detected from the touch screen.

Additionally, when the biometric signal is a heart rate, the processor is further configured to control for detecting the heart rate through an external heartbeat sensor.

Additionally, when the biometric signal is based on a user movement, the processor is further configured to control for detecting the user movement through one of an acceleration sensor and a motion sensor.

In accordance with another aspect of the present disclosure, a method for displaying a screen in a portable device is provided. The method includes detecting a user input from a touch screen, detecting a user's biometric signal through a sensor in response to the user input, and displaying biometric information corresponding to the biometric signal and having a trajectory along one of an hour hand and a minute hand on the touch screen. The trajectory connects each position spaced on the touch screen based on or in relation to a rotation center of the hour hand and the minute hand.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:

The above and other aspects, features, and advantages of certain embodiments of the present disclosure will be more apparent from the following description taken in conjunction with the accompanying drawings, in which:
FIGS. 1A and 1B are schematic front perspective views illustrating a portable device according to various embodiments of the present disclosure.
FIG. 2 is a schematic block diagram illustrating a portable device according to various embodiments of the present disclosure.
FIG. 3 is a schematic flowchart illustrating a screen displaying method of a portable device according to various embodiments of the present disclosure.
FIGS. 4A, 4B, 4C, 4D, 4E, 4F, 4G, 4H, and 4I are views illustrating a screen example of a portable device according to various embodiments of the present disclosure.
FIGS. 5A, 5B, 5C, 5D, and 5E are views illustrating a screen example of a portable device according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Terms including ordinal numbers such as "first" and "second" are used to describe various components and the above-mentioned components are not limited to the above-mentioned terms. The above-mentioned terms may be used to distinguish one component from another component. For example, a first component may be named as a second component within the scope of the present disclosure. Additionally, the second component may be named as the first component. The term "and/or" includes a combination or any one of a plurality of listed items.

A touch screen according to an embodiment of the present disclosure may include a curved or flexible edge touch screen and a flat touch screen. According to an embodiment of the present disclosure, a display unit may include a touch screen.

An application according to an embodiment of the present disclosure may mean software running on operating system (OS) for computer, embedded OS, or mobile OS. For example, application may include a web browser, a health application, a photo album application, a word processor, a spread sheet, a contacts application, a calendar application, a memo application, an alarm application, a social network system (SNS) application, a game market application, a chatting application, a map application, a music player, or a video player.

An application according to an embodiment of the present disclosure may mean software executable on a portable device or another device (for example, another portable device or a server) connected to the portable device wirelessly or wiredly. Additionally, an application according to an embodiment of the present disclosure may mean software executed on a portable device in response to a user input.

A content according to an embodiment of the present disclosure may be displayed in a running application. For example, the content may include a video file or an audio file played on a video player that is one of applications, a music file played on a music player, a photo file displayed on a photo gallery, biometric information (corresponding to a biometric signal) displayed on a health application, or a web page file displayed on a web browser.

Biometric signals according to an embodiment of the present disclosure are outputted from a user's body and detected as analog signals through a sensor. For example, the biometric signals may be a heartbeat. The biometric information may be obtained (for example, digitalized, schematized or calculated) through processing by using the detected biometric signals. For example, the biometric information may be a heartbeat.

The term "video" according to an embodiment of the present disclosure may be used with the same meaning as moving images. A content may include a video file, an audio file, a text file, an image file, or a web page executed in response to a user input (for example, touch). Additionally, the content may include a running application screen and a user interface for configuring an application screen. Additionally, a content may be understood as one content or a plurality of contents.

A widget according to an embodiment of the present disclosure means a mini application that is one of graphic user interfaces (GUIs) for more smoothly supporting an interaction of a user and an application or OS. For example, the widget may include a weather widget, a calculator widget, a clock widget, and so on.

Terms used in this specification are used to describe an embodiment, and are not intended to restrict and/or limit the scope of the present disclosure. The expressions in a singular form may include a plural form unless they have a clearly different meaning in the context. In this specification, the term "include" or "have" specifies the existence of a feature, a number, an operation, a component, a part, or a combination thereof listed on the specification but does not exclude the existences or additional possibilities of other features, numbers, operations, components, parts or combinations thereof in advance. Like reference numerals in each drawing represent members for performing the same function substantially.

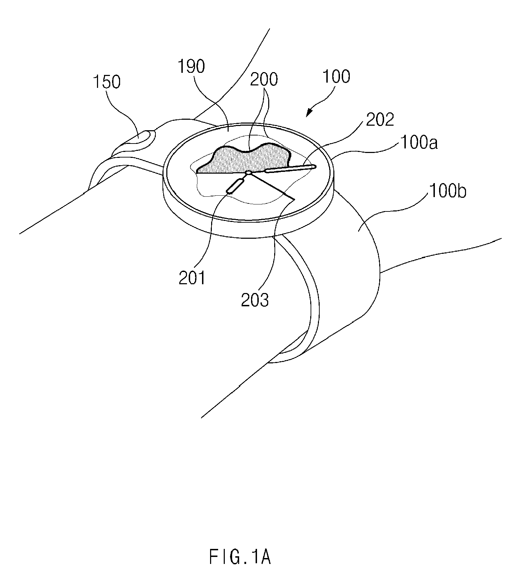

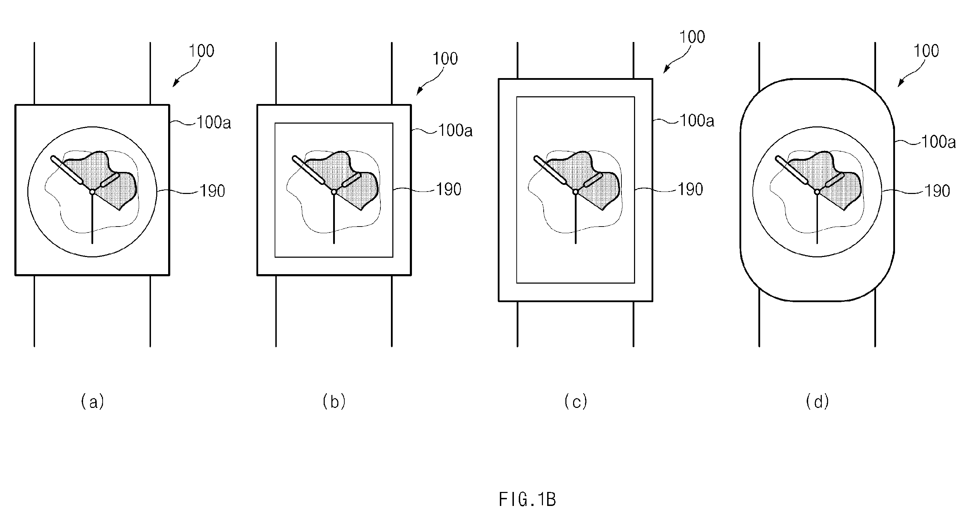

FIGS. 1A and 1B are schematic front perspective views illustrating a portable device according to various embodiments of the present disclosure.

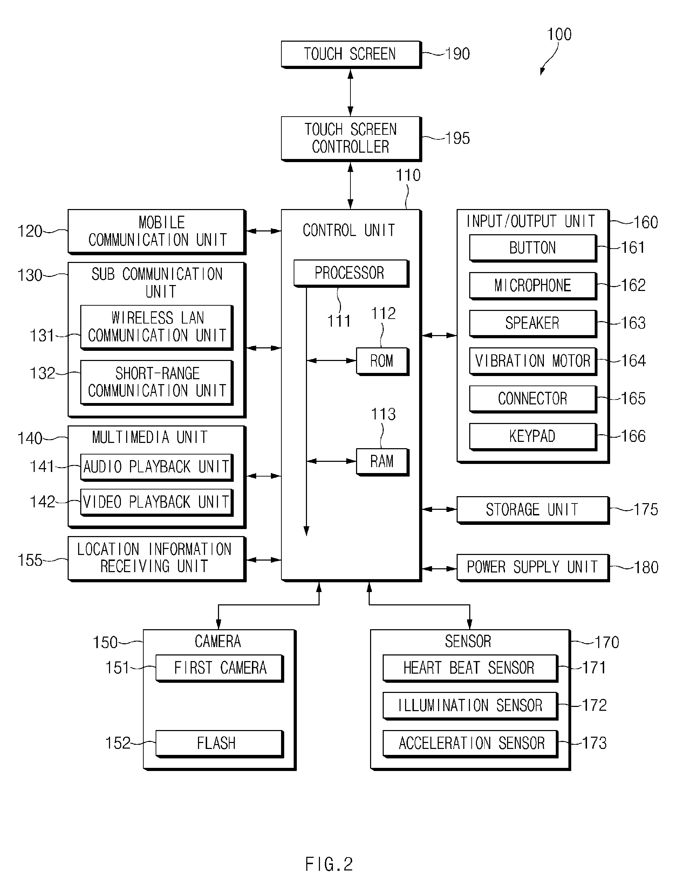

Referring to FIG. 1A, a portable device 100 is shown. A user may wear the portable device 100 on a body (for example, a head, a forehead, a chest, a wrist, a hand, or a leg). The portable device 100 may include a device for detecting a user's biometric signal (for example, a heartbeat) by using a sensor 170 (see FIG. 2) and analyzing a user's state by using biometric information corresponding to the detected biometric signal. The portable device 100 may include a wearable device worn on a user's body. The portable device 100 may be implemented using glasses, a watch, a bracelet, a headset, or a patch. According to an embodiment of the present disclosure, the portable device 100 may be worn on a user's wrist, and it is easily understood by those skilled in the art that the wearing position is not limited thereto.

The portable device 100 may receive biometric information and/or data (or content) from the outside through a communication unit 120 or 130 (see FIG. 2). Additionally, the portable device 100 may include a device for receiving biometric information corresponding to a user biometric signal from a wearable device in a wired or wireless manner and analyzing a user's state corresponding to the received biometric information. For example, the portable device 100 may include a mobile phone, a smartphone, a tablet device, an MP3 player, a video player, an electronic blackboard, a monitor, an electronic device having a display (for example, a refrigerator, a washing machine, or an air conditioner), or a display device (not shown).

The display device (not shown) may be implemented using an analog television (TV), a digital TV, a 3D-TV, a smart TV, a light emitting diode (LED) TV, an organic light emitting diode (OLED) TV, a plasma TV, a curved TV having a fixed curvature screen, a flexible TV having a fixed curvature screen, a bended TV having a fixed curvature screen, and/or a curvature variable type TV having a screen curvature varied by a received user input, but those skilled in the art easily understand that the display device (not shown) is not limited thereto.

The portable device 100 may detect a temperature, a barometric pressure, an altitude, or an illumination, in addition to a user biometric signal by using the sensor 170. The portable device 100 may detect the level of its battery charge that is remaining, data usage amount, message reception/transmission number, or communication connection state (for example, mobile communication or short-range communication)

The portable device 100 may include a housing 100a and one or more bands 100b for allowing a user to wear the housing 100a. Additionally, the portable device 100 may include a locking unit for coupling the bands 100b, for example, a buckle or a clasp (not shown).

A touch screen 190 is disposed at the front of the housing 100a of the portable device 100.

Referring to objects (a), (b), (c) and (d) of FIG. 1B, the front form of the housing 100a may be, for example, one of polygon, circuit, and ellipse or other shapes. The form of the touch screen 190 disposed at the front of the housing 100a may be, for example, one of polygon, circuit, and ellipse or other shapes. Additionally, the front form of the housing 100a and the form of the touch screen 190 may be identical to or different from each other. For example, the front form of the housing 100a and the form of the touch screen 190 may be circular. Additionally, the front form of the housing 100a may be rectangular and the form of the touch screen 190 may be circular.

A trajectory 200 corresponding to biometric information may be displayed on the touch screen 190 of the portable device 100. The trajectory 200 corresponding to biometric information may be displayed along one of an hour hand 201 and a minute hand 202 on the touch screen 190 of the portable device 100. Additionally, the trajectory 200 corresponding to biometric information may be displayed along a second hand 203 on the touch screen 190 of the portable device 100.

FIG. 2 is a schematic block diagram illustrating a portable device according to various embodiments of the present disclosure.

Referring to FIG. 2, the portable device 100 may be wiredly or wirelessly connected to another electronic device (for example, a server) by using a mobile communication unit 120, a sub communication unit 130, and a connector 165.

The portable device 100 may detect a user's biometric signal by using the sensor 170 through the touch screen 190. The portable device 100 may display biometric information corresponding to the detected biometric signal on the touch screen 190. The portable device 100 may transmit or receive biometric information and/or data (or content) to or from the outside by using the communication unit 120 or 130 through the touch screen 190. The portable device 100 may display biometric information and/or received or transmitted data (or content) on the touch screen 190.

The portable device 100 may detect a user's biometric signal through the sensor 170 based on or in relation to an interaction (for example, touch or touch gesture) inputted from the touch screen 190. The portable device 100 may display biometric information corresponding to the detected biometric signal on the touch screen 190.

The portable device 100 may transmit or receive biometric information and/or data (or content) to or from the outside through the communication unit 120 or 130 based on or in relation to an interaction (for example, touch or touch gesture) inputted from the touch screen 190. The portable device 100 may display biometric information and/or received or transmitted data (or content) on the touch screen 190.

Additionally, the portable device 100 may detect a user's biometric signal by using the sensor 170 through a display unit (not shown) including only a display panel without a touch panel. The portable device 100 may transmit or receive biometric information and/or data (or content) to or from the outside by using the communication unit 120 or 130 through a display unit (not shown) including only a display panel without a touch panel. Additionally, the portable device 100 may display biometric information and/or received or transmitted data (or content) on a display unit (not shown) including only a display panel without a touch panel.

The portable device 100 may include a control unit or processor 110, a mobile communication unit 120, a sub communication unit 130, a multimedia unit 140, a camera 150, a location information receiving unit 155, an input/output unit 1160, a sensor 170, a storage unit 175, and a power supply unit 180. Additionally, the portable device 100 includes a touch screen 190 and a touch screen controller 195.

The control unit 110 may include a processor 111. The control unit 110 may further include a read only memory (ROM) 112 where a control program for controlling the portable device 100 is stored and a random access memory (RAM) 113 for storing signals or data inputted from the outside of the portable device 100 or used as a storage area for various tasks performed in the portable device 100.

The control unit 110 performs a function for controlling an overall operation of the portable device 100 and a signal flow between the internal components 110 to 195 of the portable device 100 and processing data. The control unit 110 controls power supply to the internal components 110 to 195 by using the power supply unit 180.

The processor 111 may include a graphic processing unit (GPU) (not shown) for performing graphic processing. Additionally, the processor 111 may include a sensor processor (not shown) for controlling a sensor or a communication processor (not shown) for controlling communication.

The processor 111 may be implemented in a system on chip (SoC) form including a core (not shown) and a GPU (not shown). The processor 111 may include a single core, a dual core, a triple core, a quad core, or a core of greater than that. Additionally, the processor 111, the ROM 112, and the RAM 113 may be connected to each other.

The control unit 110 may control the mobile communication unit 120, the sub communication unit 130, the multimedia unit 140, the camera 150, the GPS 155, the input/output unit 160, the sensor 170, the storage unit 175, the power supply unit 180, the touch screen 190, and the touch screen processor or screen controller 195.

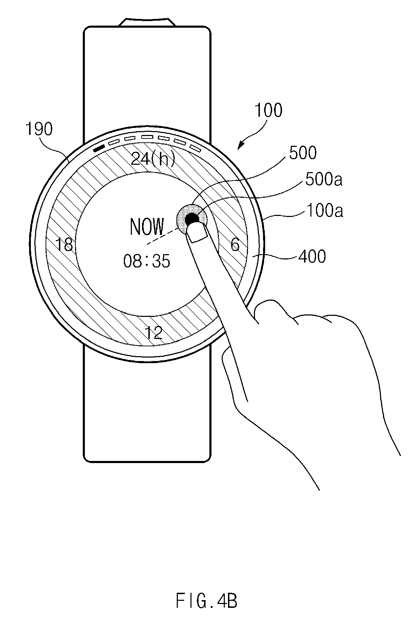

According to an embodiment of the present disclosure, the control unit 110 controls the touch screen 190 and the sensor 170 for detecting biometric signals, and performs a control to display biometric information calculated based on or in relation to the detected biometric signals as a trajectory that follows one of an hour hand and a minute hand on the touch screen 190 according to a touch 500 (see FIG. 4B) detected from the touch screen 190.

When biometric signals are heartbeats, the control unit 110 may perform a control to detect heartbeats through the heartbeat sensor 171 exposed to the outside of the portable device 100.

The control unit 110 may perform a control to display a trajectory in a 12 hr period and/or 24 hr period.

The control unit 110 may perform a control on the sensor 170 to detect biometric signals in a set period.

The control unit 110 may perform a control to display a trajectory corresponding to biometric information at a position spaced based on or in relation to the center c of the touch screen 190.

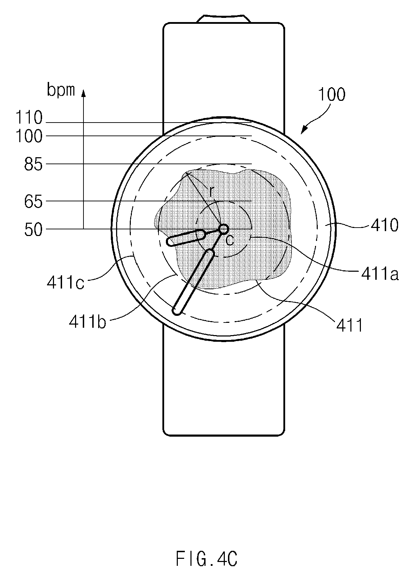

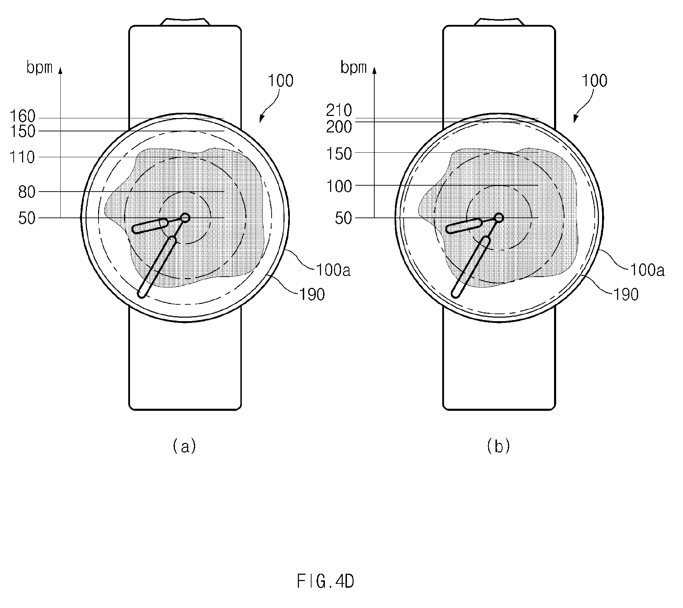

The control unit 110 may perform a control to display a trajectory corresponding to biometric information as a first trajectory 412 (see FIG. 4D) and display a second trajectory 411 (see FIG. 4C) calculated before the calculation timing of the first trajectory 412 together with the first trajectory 412.

The control unit 110 may display them distinctively by using a first trajectory style and a second trajectory style, and the style may include at least one of the color of a trajectory, the thickness of a trajectory, a dash-type, and a fill color.

The control unit 110 may perform a control to change the first trajectory style based on or in relation to the calculated biometric information.

The control unit 110 may perform a control to display a first trajectory and a second trajectory on the same vertical axis by using the maximum heart rate in the calculated biometric information.

The control unit 110 may perform a control to display a heart rate corresponding to biometric information as one of text and symbol as it is adjacent to a trajectory.

When a biometric signal is a user movement, the control unit 110 may perform a control to detect a user movement through one of the acceleration sensor 173 and a motion sensor (not shown).

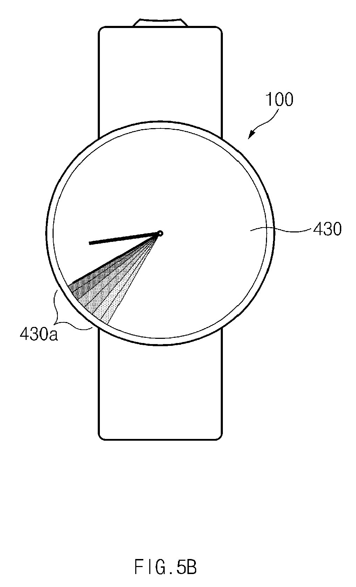

The control unit 110 may perform a control to display a trajectory corresponding to biometric information as a shadow area 430a (see FIG. 5B) based on or in relation to the center c of the touch screen 190 according to a set period.

When an idle time increases in the trajectory, the control unit 110 may perform a control to display the gradation of the shadow area 430a adjacent to one of an hour hand and a minute hand to be dark.

When an idle time increases in the trajectory, the control unit 110 may perform a control to display a text corresponding to the increase of the idle time to be adjacent to one of an hour hand and a minute hand.

When an idle time increases in the trajectory, the control unit 110 may perform a control to display a notification message corresponding to the increase of the idle time.

The control unit 110 may perform a control to provide a feedback (for example, one of a visual feedback, an auditory feedback, and a tactile feedback) corresponding to the display of a trajectory corresponding to biometric information.

According to an embodiment of the present disclosure, the term "control unit" includes the processor 111, the ROM 112, and the RAM 113.

The mobile communication unit 120 may be connected to another device (for example, another portable device or a server) through a mobile communication network by using one or more antennas according to a control of the control unit 110. The mobile communication unit 120 may receive biometric information and/or data (or content) from another device according to a control of the control unit 110. The received biometric information and/or data (or content) may be stored in the storage unit 175 according to a control of the control unit 110.

The sub communication unit 130 may be connected to another device (for example, another portable device or a server) through a wireless local access network (LAN) communication unit 131 and/or a short-range communication unit 132 according to a control of the control unit 110. The sub communication unit 130 may transmit or receive biometric information and/or data (or content) to or from another device according to a control of the control unit 110. The biometric information and/or data (or content) may be stored in the storage unit 175 according to a control of the control unit 110.

The wireless LAN communication unit 131 may be wirelessly connected to an access point (AP) in a place where the AP is installed according to a control of the control unit 110. The wireless LAN communication unit 131, for example, may include Wi-Fi. The wireless LAN communication unit 131 supports wireless LAN standard (that is, IEEE802.11x) of the Institute of Electrical and Electronics Engineers (IEEE).

The short-range communication unit 132 may perform short-range communication between the portable device 100 and an external device wirelessly without an AP according to a control of the control unit 110. The short-range communication may include Bluetooth, Bluetooth low energy (BLE), infrared data association (IrDA), ultra-wideband (UWB), and near field communication (NFC).

The portable device 100 may include one of the mobile communication unit 120, the wireless LAN communication unit 131, and the short-range communication unit 132 or a combination of the mobile communication unit 120, the wireless LAN communication unit 131, and the short-range communication unit 132. The portable device 100 may be connected to various external accessories (for example, a wireless speaker, a wireless headset, and so on) by using one of the mobile communication unit 120 and the sub communication unit 130.

According to an embodiment of the present disclosure, the term "communication unit" includes the mobile communication unit 120 and/or the sub communication unit 130.

The multimedia unit 140 may play audio and/or video according to a control of the control unit 110. The multimedia unit 140 may include an audio playback unit 141 and/or a video playback unit 142.

The audio playback unit 141 may play an audio source (for example, an audio file with a file extension including MPEG-2 Audio Layer III (MP3), Windows Media Audio WMA, Ogg container format, or Waveform Audio File Format (WAVE or WAV) pre-stored in the storage unit 175 of the portable device 100 or received from the outside by using audio codec according to a control of the control unit 110.

According to an embodiment of the present disclosure, the audio playback unit 141 may play an auditory feedback (for example, the output of an audio source stored in a storage unit) corresponding to the display of a trajectory corresponding to biometric information, on the touch screen 190.

According to an embodiment of the present disclosure, the audio playback unit 141 may play an auditory feedback (for example, the output of an audio source stored in a storage unit) corresponding to the display of a trajectory corresponding to biometric information through audio codec, on the touch screen 190, according to a control of the control unit 110.

The video playback unit 142 may play a digital video source (for example, a video file with a file extension including mpeg, mpg, mp4, avi, mov, or mkv) pre-stored in the storage unit 175 of the portable device 100 or received from the outside by using video codec according to a control of the control unit 110.

A multimedia application installable on the portable device 100 may play an audio source or a video source by using audio codec and/or video codec. Additionally, a multimedia application installable on the portable device 100 may play a video source by using hardware codec (not shown) and/or software codec (not shown).

According to an embodiment of the present disclosure, the video playback unit 142 may play a visual feedback (for example, the output of a video source stored in a storage unit) corresponding to the display of a trajectory corresponding to biometric information, on the touch screen 190. According to an embodiment of the present disclosure, the video playback unit 142 may play a video feedback (for example, the output of a video source stored in a storage unit) corresponding to the display of a trajectory corresponding to biometric information through video codec, on the touch screen 190, according to a control of the control unit 110.

The multimedia unit 140 may include one of the audio playback unit 141 and/or the video playback unit 142 based on or in relation to the performance or structure of the portable device 100. Additionally, the control unit 110 may be implemented to include one of the audio playback unit 141 and the video playback unit 142.

According to an embodiment of the present disclosure, the term "audio codec" may include one or more audio codec. According to an embodiment of the present disclosure, the term "video codec" may include one or more video codec.

Referring to FIGS. 1A and 2, the camera 150 may capture a sill image or a video according to a control of the control unit 110. The camera 150 may be disposed at one of the front and side of the portable device 100 and the surface of the band 100b. The camera 150 may include an auxiliary light source (for example, a flash 152) for providing a light amount to a first camera 151.

The camera 150 may be implemented in a form including the first camera 151 and an additional camera (for example, a second camera (not shown)) adjacent to the first camera 151, for example, a form in which a first camera and a second camera are implemented in one unit. For example, an interval between a second camera (not shown) and the first camera 151 may be implemented to be greater than 5 mm and less than 80 mm. When a second camera (not shown) is further included, the control unit 110 may capture a 3-D still image or a 3-D video by using the first camera 151 and the second camera (not shown).

The camera 150 or first camera 151 may perform wide-angle, telephoto, and close-up capturing by using an additional lens (not shown) detachable from an additional adapter (not shown).

Referring to FIG. 2, a location information receiving unit 155 receives signals (for example, orbit information of a navigation satellite, time information of a navigation satellite, and a navigation message) periodically from a plurality of navigation satellites on the earth's orbit. The portable device 100 may calculate the locations of a plurality of navigation satellites (not shown) and the portable device 100 by using the received signals and calculate the distance by using a transmission/reception time difference. The location, time, or moving speed of the portable device 100 may be calculated through triangulation. Location information received by the location information receiving unit 155 may be received from the American global positioning system (GPS), the Russian global navigation satellite system (GLONASS) or the European Galileo. Additionally, the portable device 100 may receive location information provided from a local area (for example, India).

In the case of the portable device 100 is in an indoor location, the portable device 100 may detect the location or moving speed of the portable device 100 by using a wireless AP (not shown) or a wireless beacon (not shown). Those skilled in the art will easily understand that the indoor location of the portable device 100 can be detected through various methods in addition to the above method.

The input/output unit 160 may include at least one of one or more buttons 161, a microphone 162, a speaker 163, a vibration motor 164, a connector 165, and a keypad 166.

Referring to FIG. 1A, the button 161 may include a home button (not shown) disposed at one of the front and side of the portable device 100. The button 161 may be implemented with a touch button in addition to a physical button. Additionally, the button 161 may be displayed as a text image or an icon form on the touch screen 190.

The microphone 162 may receive voice or sound from an external source or the outside to generate electrical signals according to a control of the control unit 110. Electrical signals generated from the microphone 162 may be converted by audio codec and stored in the storage unit 175 or outputted through the speaker 163 according to a control of the control unit 110. Referring to FIG. 1A, the microphone 162 may be disposed at one or more of the front, side and/or rear of the portable device 100. Additionally, one or more microphones 162 may be disposed at only the side of the portable device 100.

The speaker 163 may output sound corresponding to various signals (for example, wireless signals, broadcast signals, audio sources, video files or picture capturing) decoded by audio codec according to a control of the control unit 110.

Referring to FIGS. 1A and 2, one or a plurality of speakers 163 may be disposed at the front, side and/or rear of the portable device 100. One speaker may be disposed at each of the side and rear of the portable device 100.

According to an embodiment of the present disclosure, the speaker 163 may output an auditory feedback corresponding to the display of a trajectory corresponding to biometric information, on the touch screen 190.

The vibration motor 164 may convert electrical signals into mechanical vibration according to a control of the control unit 110. The vibration motor 164 may include a linear vibration motor, a bar-type vibration motor, a coin-type vibration motor, or a piezoelectric element vibration motor.

One or more vibration motors 164 may be disposed at the portable device 100. Additionally, the vibration motor 164 may vibrate the entire portable device 100 or vibrate only a portion of the portable device 100 locally.

According to an embodiment of the present disclosure, the vibration motor 164 may output a tactile feedback corresponding to the display of a trajectory corresponding to biometric information, on the touch screen 190.

The connector 165 may be used as an interface for connecting the portable device 100 and an external device (not shown) or a power source (not shown). The connector 165 may be disposed at one of the side and rear of the portable device 100.

The portable device 100 may transmit or receive biometric information and/or data (or content) to or from an external source or the outside through a wired cable connected to the connector 165 according to a control of the control unit 110. The portable device 100 may receive power from a power source (not shown) through a wired cable connected to the connector 165 or charge a battery (not shown) according to a control of the control unit 110.

Referring to FIG. 2, the keypad 166 may receive a key input from a user in order to control the portable device 100. The key pad 166 includes a physical keypad (not shown) formed at the front of the portable device 100, a virtual keypad (not shown) displayed within the touch screen 190, or a physical key pad (not shown) connectable in a wireless or wired manner.

The sensor 170 may detect a state of the portable device 100 and/or a peripheral state of the portable device 100. Additionally, the sensor 170 may detect user's biometric signals. The sensor 170 may include one or a plurality of sensors. For example, the sensor 170 may include a heart rate sensor (or a heartbeat sensor 171) for detecting a user's heartbeat, an illumination sensor 172 for detecting an amount of light around the portable device 100, or an acceleration sensor 173 for detecting the accelerations of three axes (for example, an x-axis, a y-axis, and a z-axis) applied to the portable device 100.

The sensor 170, shown in FIG. 2, may include a fingerprint sensor (not shown) for detecting a user's fingerprint of the portable device100, a proximity sensor (not shown) for determining whether a user approaches the portable device 100, a gravity sensor for detecting an applying direction of gravity, or an altimeter for detecting an altitude by measuring a pressures in atmosphere.

The sensor 170 may detect user's biometric signals and/or a state of the portable device 100 and generate electrical signals corresponding to the detection to transmit them to the control unit 110. Those skilled in the art may easily understand that a sensor included in the sensor 170 is added, changed or deleted according to the performance of the portable device 100.

The storage unit 175, shown in FIG. 2, may store input/output signals or data to correspond to operations of the mobile communication unit 120, the sub communication unit 130, the multimedia unit 140, the camera 150, the location information receiving unit 155, the input/output unit 160, the sensor 170, and the touch screen 190 according to a control of the control unit 110. The storage unit 175 may store a GUI relating to a control program for controlling the portable device 100 or the control unit 110 and an application provided from a manufacturer or downloaded from the outside, images for providing the GUI, user information, documents, databases, or related data.

According to an embodiment of the present disclosure, the storage unit 175 may store resolution information of the touch screen 190 and portable device information including size information, connectable another device information, or server information.

With reference to FIG. 2, the storage unit 175 may store biometric signals detected through the sensor 170.

The storage unit 175 may store biometric information (for example, a heartbeat, electrocardiogram, or user movement) corresponding to the detected biometric signals.

The storage unit 175 may store biometric signals received from the outside and biometric information corresponding to the biometric signals.

The storage unit 175 may store a first touch position corresponding to a first touch 500 and first touch position information.

The storage unit 175 may store a first biometric signal detection mode, first biometric signal detection mode information, a first biometric signal detection mode, and first biometric signal detection mode information.

The storage unit 175 may store a heart rate database (for example, a sex-specific heart rate, an age-specific heart rate, and an exercise intensity-specific heart rate).

According to an embodiment of the present disclosure, the term "storage unit" includes the storage unit 175, the ROM 112 in the control unit 110, the RAM 113, or a memory card (not shown) mounted in the portable device 100 (for example, micro secure digital (SD) card and memory stick). The storage unit 175 may include nonvolatile memory, volatile memory, hard disk drive (HDD), or solid state drive (SSD).

The power supply unit 180, shown in FIG. 2, may supply power to the components 110 to 195 in the portable device 100 according to a control of the control unit 110. The power supply unit 180 may supply power inputted from an external power source (not shown) to each component of the portable device 100 through a wired cable (not shown) connected to the connector 165 according to a control of the control unit 110.

The power supply unit 180 may charge one or more batteries (not shown) by using power supplied according to a control of the control unit 110. A battery (not shown) may be disposed between the touch screen 190 disposed at the front and the rear (not shown).

The power supply unit 180 may wirelessly charge a battery (not shown) by using a coil (not shown) (for example, a magnetic resonance method, an electromagnetic wave method, or the magnetic induction method) according to a control of the control unit 110.

The touch screen 190, shown in FIG. 2, may provide a GUI corresponding to various services (for example, biometric information display, audio calls, video calls, data transmission, broadcast reception, photography, video view, or application execution) to a user. The touch screen 190 may include a touch panel (not shown) for receiving a user's touch input and a display panel (not shown) for displaying a screen.

The touch screen 190 (or a touch panel) transmits, to the touch screen controller or processor 195, analog signals corresponding to a touch (for example, single touch or multi touch) inputted through a home screen (not shown), the screen 400 (see FIG. 2) of an application, or a GUI. The touch screen 190 may receive single touch or multi touch through a user's body (for example, fingers including the thumb) or an input pen (for example, a stylus) (not shown).

When the touch screen 190 is an integrated touch screen where both sides are bent, it may include a main display area (not shown) and an edge display area (not shown) at the side. The main display area (not shown) may be flat or have a smaller curvature (for example, close to flat) than the edge display area (not shown).

A touch screen (or a display panel) displays various images and a plurality of objects through a plurality of pixels according to various operating states, application, or service execution. For example, a display panel (not shown) may have a liquid crystal display (LCD) type, an LED type, or an organic LED type. According to an embodiment of the present disclosure, a touch is not limited to a contact of the touch screen 190 and a user's body or an additional input pen (not shown), and includes non-contact. For example, the non-contact may include a hovering whose interval between the touch screen 190 and a user's body or an input pen (not shown) is less than 50 mm. Those skilled in the art may easily understand that a detectable non-contact interval is changed on the touch screen 190 according to the performance or structure of the portable device 100.

The touch screen 190, for example, may be implemented through a resistive method, a capacitive method, an infrared method, or an acoustic wave method.

According to an embodiment of the present disclosure, the touch screen 190 may output a visual feedback corresponding to the display of a trajectory corresponding to biometric information, on the touch screen 190. The touch screen 190 may display a visual feedback corresponding to a content changed in relation to the display of a trajectory corresponding to biometric information, on the touch screen 190, according to a control of the control unit 110.

With reference to FIG. 2, the touch screen processor or screen controller 195 converts analog signals corresponding to a touch (for example, single touch or multi touch) received from the touch screen 190 to digital signals and transmits them to the control unit 110. The control unit 110 may calculate X coordinates and Y coordinates corresponding to the position of a touch inputted from the touch screen 190 by using the digital signals received from the touch screen controller or processor 195.

The control unit 110 may control the touch screen 190 by using the digital signals received from the touch screen controller or processor 195. For example, the control unit 110 may display a shortcut icon displayed on the touch screen 190 to be distinguished from another shortcut icon in response to an input touch or display an application screen on the touch screen 190 by executing an application and/or a widget corresponding to a selected shortcut icon. The touch screen controller or processor 195 may be included in the control unit 110 in relation to the performance or structure of the portable device 100.

The portable device 100 shown in FIGS. 1A, 1B, and 2 is illustrated only for one touch screen but may include a plurality of touch screens (for example, included in one housing).

The portable device 100 shown in FIGS. 1A, 1B, and 2 is illustrated only for a flat touch screen but is not limited thereto. Those skilled in the art may easily understand that the portable device 100 is implemented with a flexible curved touch screen.

Those skilled in the art may easily understand that at least one of components of the portable device 100 shown in FIGS. 1A, 1B, and 2 are added, deleted or changed according to the performance of the portable device 100.

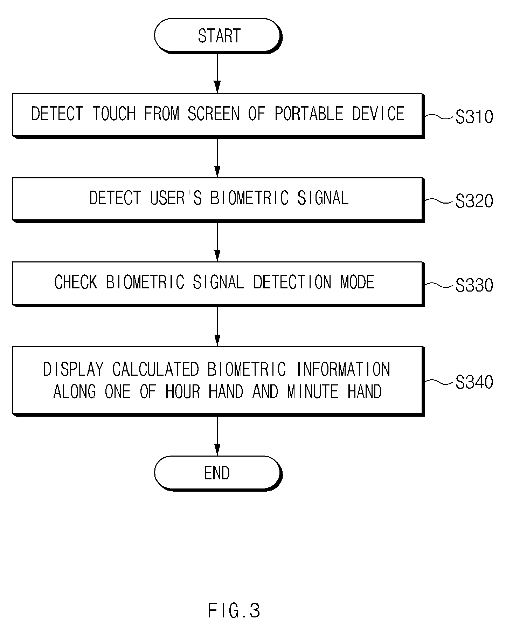

FIG. 3 is a schematic flowchart illustrating a screen displaying method of a portable device according to various embodiments of the present disclosure.

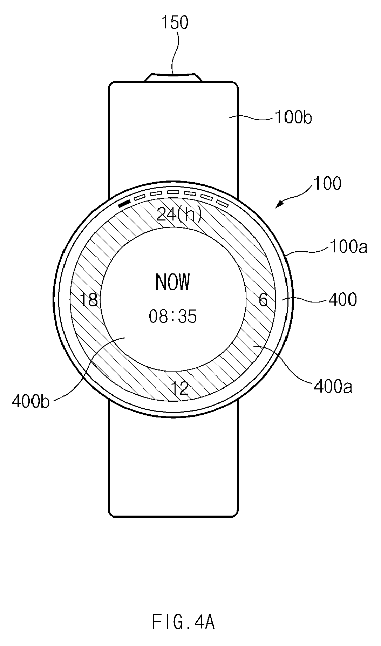

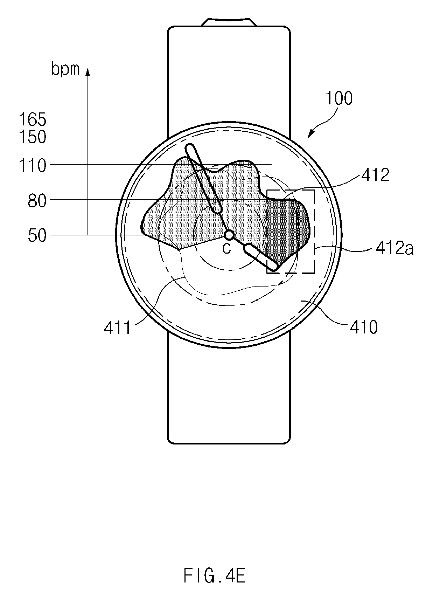

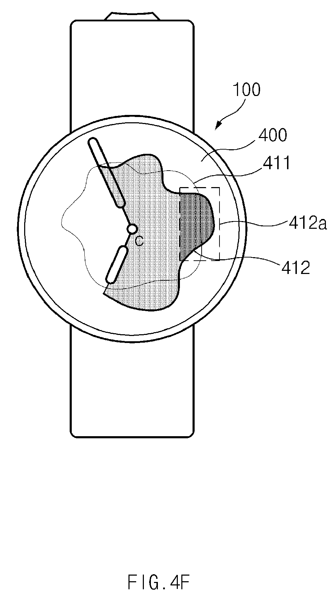

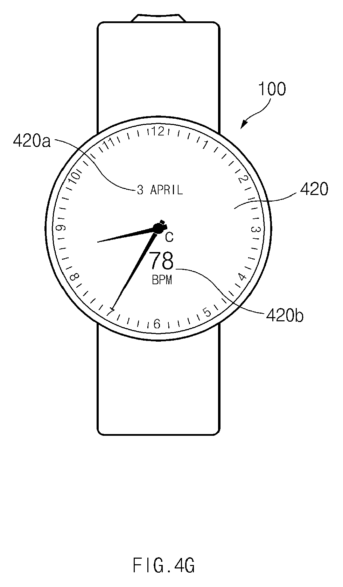

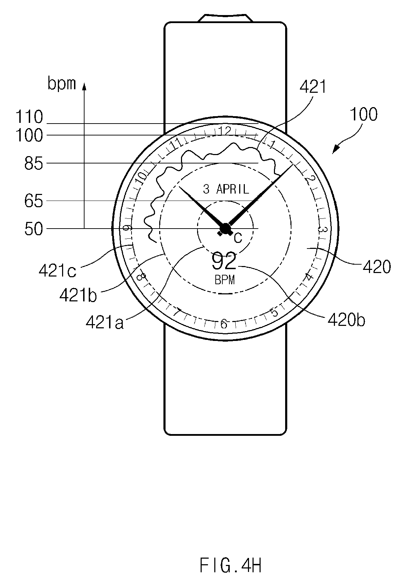

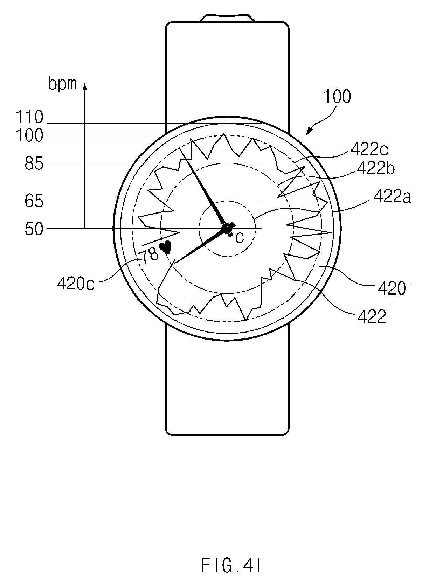

FIGS. 4A, 4B, 4C, 4D, 4E, 4F, 4G, 4H, and 4I are views illustrating a screen example of a portable device according to various embodiments of the present disclosure.

In operation S310 shown in FIG. 3, a touch is detected from a screen of the portable device.

Referring to FIGS. 4A and 4B, the home screen 400 of a health application is displayed on the touch screen 190. A shortcut icon (not shown) corresponding to the health application displayed on the touch screen 190 of the portable device (for example, the wearable device 100) may be selected by a user. The control unit 110 may execute the health application in relation to a user selection.

The control unit 110 may display the home screen 400 of the health application on the touch screen 190. The home screen 400 is displayed in 24 hour or 24 hr mode but may be changed to 12 hour or 12 hr mode. The home screen 400 may include a session area 400a for representing a state (for example, un-wearing or wearing the portable device 100, inactivity, or activity) of the portable device 100 and a display area 400b for displaying a current time, an activity time, and/or a text.

According to a screen provided from the health application, the size of one of the session area 400a and the display area 400b may be changed. According to a screen provided from the health application, the width of the session area 400a may be changed. Additionally, according to a screen provided from the health application, a text (for example, a current time, an activity time, calories consumed, and a traveling distance) displayed on the display area 400b may be changed.

A user performs a first touch 500 on the home screen 400. The control unit 110 may detect the first touch 500, shown in FIG. 4B, by using the touch screen 190 and the touch screen processor or screen controller 195. The control unit 110 may calculate a first touch position 500a (for example, X coordinates and Y coordinates) corresponding to the first touch 500 by using electrical signals received from the touch screen controller 195.

The control unit 110 may store first touch position information corresponding to the first touch position 500a in the storage unit 175. The stored first touch position information may include a touch identifier (ID) for history management, a touch position, a touch detection time, or touch information (for example, a touch pressure, a touch direction, a touch duration time, and so on).

The control unit 110 may detect a touch gesture (for example, double tap, flick, drag, or swipe) in addition to the first touch 500.

Referring to FIG. 4B, the first touch 500 (for example, contact or non-contact hovering) detected from the touch screen 190, for example, may occur by a touch of one of fingers including the thumb or a touch available input pen (not shown).

The control unit 110 may detect a motion of the portable device 100 by using the acceleration sensor 173 in addition to a first touch. A motion of the portable device 100 may include shaking the portable device 100 one to three times or rotating the portable device 100 one to three times.

The control unit 110 may receive a user's voice by using the microphone 162 in addition to the first touch. The user's voice may include various user voices corresponding to "heart beat measurement".

The first touch 500, a touch gesture, a user voice, or a motion of the portable device 100 may be a trigger corresponding to the detection of a user's biometric signal through a sensor (for example, a heartbeat sensor). Those skilled in the art may easily understand that in addition to the first touch 500, a touch gesture, a user voice, or a motion of the portable device 100, various triggers are applicable.

In operation S320 shown in FIG. 3, a user's biometric signal is detected.

The control unit 110 may detect a user's biometric signal (for example, a heartbeat) by using the heartbeat sensor 171 (shown in FIG. 2), in response to or based on the first touch 500. The heartbeat sensor 171 may be exposed to the rear of the portable device 100. The heartbeat sensor 171 may be implemented in a PhotoPlethysmoGraphy (PPG) method.

The heartbeat sensor 171 including an LED (not shown) and a photo diode (not shown) may detect the contraction and expansion of blood vessels by light reflection (or light transmission) according to changes in the amount of blood that moves through the blood vessels of a wrist. The control unit 110 may calculate a heart rate by using the detected contraction and expansion of blood vessels. The storage unit 175 may store a heart rate calculated according to a control of the control unit 110. The calculated heart rate may be referenced as biometric information corresponding to a heartbeat (for example, biometric signal).

The control unit 110 may detect a user's heartbeat through a fingertip or a finger in addition to a wrist by using the heartbeat sensor 171 according to a wearing position of the portable device 100.

The control unit 110 may detect a user's heartbeat through electrocardiography (ECG) or a body's vibration in addition to PPG.

The control unit 110 may receive biometric information, which is detected by the portable device 100 for detecting a heartbeat of a user at the outside and an additional device (for example, an ECG device) (not shown), through a communication unit and the connector 165. Additionally, the control unit 110 may receive biometric signals, which are detected by an additional sensor (not shown) for detecting a heartbeat of a user at the outside, through a communication unit and the connector 165. The storage unit 175 may store biometric signals received from the outside according to a control of the control unit 110.

The control unit 110 may detect a temperature, a barometric pressure, an altitude, or an illumination in addition to a user biometric signal by using the sensor 170. The control unit 110 may detect the battery remaining amount, data usage amount, message reception/transmission number, or communication connection state (for example, mobile communication or short-range communication) of the portable device 100.

The control unit 110 may calculate a heart rate by using the received biometric signals (for example, a heartbeat). The storage unit 175 may store a heart rate calculated according to a control of the control unit 110.

In operation S330 shown in FIG. 3, a biometric signal detection mode is checked.

The health application may include a plurality of biometric signal detection modes. The health application may include a first biometric signal detection mode for detecting a user's biometric signal in a 10 min period and a second biometric signal detection mode for detecting a user's biometric signal in a shorter period (for example, 1 min) than the first biometric signal detection mode. Additionally, the health application may include a third biometric signal detection mode for detecting a user's biometric signal only once. There may be only one biometric signal detection mode (for example, only the first biometric signal detection mode).

With reference to operation S330 shown in FIG. 3, a detection period of the first biometric signal detection mode and/or a detection period of the second biometric signal detection mode may be changed through a setting (for example, manufacturer setting or user setting). For example, a detection period of the first biometric signal detection mode may be set to 5 min, 15 min, or another period. Additionally, a detection period of the second biometric signal detection mode may be set to 30 sec, 15 sec, 10 sec, or another period.

A biometric signal detection mode may be selected by a user (or a manufacturer) in the setting (not shown) of the health application. The selected biometric signal detection mode may be stored as the first biometric signal detection mode information in the storage unit 175 according to a control of the control unit 110. One (for example, the first biometric signal detection mode) selected from a plurality of biometric signal detection modes may be stored as the default biometric signal detection mode according to a control of the control unit 110.

The stored first biometric signal detection mode may include an ID for history management, a selected biometric signal detection mode (for example, the first to third biometric signal detection modes), or a biometric signal detection signal selection time.

The first biometric signal detection mode information may be stored as the setting of the health application or stored as an additional file in the storage unit 175.

The control unit 110 may check the biometric signal detection mode (for example, the first biometric signal detection mode) stored in response to the first touch 500. The control unit 110 may determine the biometric signal detection mode stored in response to the first touch 500. Additionally, the control unit 110 may read the biometric signal detection mode stored in response to the first touch 500.

The checking of the biometric signal detection mode in operation S330 of FIG. 3 may be omitted. For example, if there is no biometric signal detection mode in the portable device 100, the control unit 110 may proceed to operation S340 without performing operation S330 of FIG. 3. Additionally, if there is one biometric signal detection mode in the portable device 100, the control unit 110 may proceed to operation S340 without performing operation S330 of FIG. 3.

In operation S340 shown in FIG. 3, the calculated biometric information is displayed along one of an hour hand and a minute hand.

Referring to FIGS. 4C and 4F, the control unit 110 may display the calculated biometric information on the first heartbeat screen 410 along one of an hour hand and a minute hand in relation to the biometric signal detection mode (for example, the first biometric signal detection mode).

The control unit 110 (shown in FIG. 2) may display the calculated biometric information as one of an hour hand trajectory and a minute hand trajectory based on or in relation to the first biometric signal detection mode. The trajectories 411 and 412 may be displayed by a curve or a broken line. The trajectories 411 and 412 may be displayed by one line. Additionally, the trajectories 411 and 412 may be displayed by a broken curve or a broken line.

The control unit 110 may display a heart rate trajectory 411 for previous 12 hr (or 24 hr) on the first heartbeat screen 410 based on or in relation to a detection time (for example, 8:35 am) of the first touch 500. The heart rate trajectory 411 for previous 12 hr (or 24 hr) may be called a previous heart rate trajectory.

When the stored biometric signal detection mode is the first biometric signal detection mode, the control unit 110 may display the maximum heart rate and the minimum heart rate during previous 12 hr on the first heartbeat screen 410.

The position (or distance) of the heart rate trajectory 411 may be a heart rate calculated at a corresponding time based on or in relation to the center c on the touch screen 190 of the portable device 100. The center c on the touch screen 190 of the portable device 100 may mean a position corresponding to the rotation axis of the hour hand and the minute hand of an analog watch. Those skilled in the art may easily understand that the position of the center c on the touch screen 190 of the portable device 100 varies according to the form of the housing 100a and the touch screen 190 of the portable device 100. For example, the position (or distance) of the heart rate trajectory 411 based on or in relation to the center c of the portable device 100 at 10:40 pm yesterday prior to the current time is a heart rate (for example, 95 bpm) calculated at 10:40 pm yesterday. A heart rate trajectory may be a line for connecting the position of a heart rate calculated in relation to each detected heart rate.

Referring to FIGS. 4C and 4D, the control unit 100 may change the position of the trajectory 411 displayed on the first heartbeat screen 410 by using the calculated maximum and minimum heart rates. The control unit 100 may change the vertical axis values (for example, 65, 85, 100, and 110) of the first heartbeat screen 410 by using the calculated maximum and minimum heart rates.

The control unit 100 may divide the first heartbeat screen 410 into a plurality of areas by using the calculated maximum and minimum heart rates. For example, when the maximum heart rate is 100, based on or in relation to the center c of the portable device 100, the maximum display heart rate may be 110 by setting + 10% (subject to change) of the maximum heart rate.

The control unit 110 may set the center c of the portable device 100 to a heart rate of 50 by using the minimum heart rate. When the calculated minimum heart rate is 50, the control unit 110 may set the center c of the portable device 100 to a heart rate of 45.

In object (a) in FIG. 4D, when the maximum heart rate is 150, based on or in relation to the center c of the portable device 100, the maximum display heart rate may be 165 by setting + 10% (subject to change) of the maximum heart rate. The center c of the portable device 100 may set the heart rate to 50 (subject to change).

In object (b) in FIG. 4D, when the maximum heart rate is 180, based on or in relation to the center c of the portable device 100, the maximum display heart rate may be 210 by setting + 10% (subject to change) of the maximum heart rate. The center c of the portable device 100 may set the heart rate to 50 (subject to change).

The control unit 110 may change the trajectory 411 on the first heartbeat screen 410 by using user information (for example, name, sex, age, and so on) of a user who wears the portable device 100. Additionally, the control unit 100 may change the vertical axis values (for example, 65, 85, 100, and 110) of the first heartbeat screen 410 by using the user information of a user who wears the portable device 100.

The control unit 110 may or may not display heart rate lines 411a, 411b or 411c. Additionally, the control unit 100 may or may not display the vertical axis values (for example, 65, 85, 100, and 110) corresponding to the heart rate lines 411 a, 4111b or 411c on the first heartbeat screen 410.

A style of the heart rate trajectory 411 (for example, the color of a trajectory, the width of a trajectory, a dash type of a trajectory, and so on) may be changed. The color of the heart rate trajectory 411 may indicate a user's state. A heart rate database (for example, a sex-specific heart rate, an age-specific heart rate, and an exercise intensity-specific heart rate) may be stored in the storage unit 175.

The control unit 110 may compare a periodically-calculated heart rate with a stored heart rate database. According to a comparison result, the control unit 110 may change the color of the heart rate trajectory 411. For example, when the calculated heart rate is within a normal range, the control unit 110 may display the color of the trajectory 411 corresponding to a heart rate detection time as white color. When the calculated heart rate is within an abnormal range, the control unit 110 may display the color of the trajectory 411 corresponding to a heart rate detection time as red color. Additionally, when the calculated heart rate is within an abnormal range, the control unit 110 may change the thickness (for example, one pixel -> two pixels) of the heart rate trajectory 411 and/or a dash type (for example, a solid line -> a broken line).

The control unit 110 (shown in FIG. 2) may display a detected temperature, barometer pressure, altitude, or illumination in addition to biometric information, along one of an hour hand trajectory and a minute hand trajectory. Additionally, the control unit 110 may display the battery remaining amount, data usage amount, message reception/transmission number, or communication connection state (for example, mobile communication or short-range communication) of the portable device 100, along one of an hour hand trajectory and a minute hand trajectory.

The control unit 110 may provide a feedback corresponding to the display of a trajectory corresponding to biometric information to a user. The provided feedback may be provided as one of visual feedback, auditory feedback, and tactile feedback. Additionally, the control unit 110 may provide a combination of visual feedback, auditory feedback, and tactile feedback to a user.

The visual feedback may include a visual effect (for example, an additional image or an animation effect such as fade applied to an additional image) (not shown) corresponding to the display of a trajectory corresponding to biometric information.

The auditory feedback may include a sound corresponding to the display of a trajectory corresponding to biometric information. The control unit 110 may output an auditory feedback through a speaker 163.

The tactile feedback may include a vibration corresponding to the display of a trajectory corresponding to biometric information. The control unit 110 may output a tactile feedback through a vibration motor 164. In the case of a plurality of vibration motors, the control unit 110 may selectively output a tactile feedback through one of the plurality of vibration motors.

A feedback providing time (for example, 500 ms) provided to a user may be changed through a configuration (not shown). Additionally, at least one of a plurality of feedbacks (for example, a visual feedback, an auditory feedback, and a tactile feedback) provided in relation to the display of a trajectory corresponding to biometric information may be selected.

Referring to FIG. 4E, the control unit 110 displays a heart rate trajectory 412 corresponding to a periodically-calculated heart rate on the first heartbeat screen 410. The control unit 110 may display the current heart rate trajectory 412 corresponding to a heart rate that is periodically calculated from a detection time (for example, 8:35 am) of the first touch 500 to the current time (for example, 3:50 pm). The heart rate trajectory 412 may be called the current heart rate trajectory.

The control unit 110 may display the current heart rate trajectory 412 corresponding to a periodically (for example, 10 min)-calculated heart rate on the first heartbeat screen 410 together with the previous heart rate trajectory 411 in response to the first touch 500. Additionally, the control unit 110 may display the current heart rate trajectory 412 as overlapping the previous heart rate trajectory 411.

A style of the current heart rate trajectory 412 (for example, the color of a trajectory, the width of a trajectory, a dash type of a trajectory, and so on) may be distinguished from a style of the previous heart rate trajectory 411. The fill color of the current heart rate trajectory 412 may be distinguished from the fill color of the previous heart rate trajectory 411.

Referring to FIG. 4E, an area 412a from 2:10 pm to 3:30 pm in the current heart rate trajectory 412 may be a user's workout section. The control unit 110 may distinguish another time slot of the current heart rate trajectory 412 by changing a transparency of the fill color of the area 412a from 2:10 pm to 3:30 pm.

The user's workout section 412a may be automatically detected through the sensor 170 or may be determined a user's manual input. The control unit 110 may distinguish another time slot of the current heart rate trajectory 412 by changing the fill color (for example, purple -> violet) of the area 412a from 2:10 pm to 3:30 pm in relation to a user workout section.

Referring to FIG. 4F, the control unit 110 displays the heart rate trajectory 412 corresponding to a periodically-calculated heart rate on the first heartbeat screen 410. The current heart rate trajectory 412 is increased by an elapsed time in comparison to FIG. 4D. The control unit 110 may display the current heart rate trajectory 412 corresponding to a heart rate that is periodically calculated from a detection time (for example, 8:35 am) of the first touch 500 to the current time (for example, 6:50 pm).

When a 12 hr period elapses from the first touch detection time (for example, 8:45 am), the current heart rate trajectory 412 may be connected to the start position of the trajectory 412 corresponding to the first touch detection time (for example, 8:45 am). When the current heart rate trajectory 412 forms a closed curve, the control unit 110 may make the previous heat rate trajectory 411 disappear. When the current heart rate trajectory 412 forms a closed curve, the control unit 110 may display only the current heart rate trajectory 412.

When a 12 hr period elapses from the first touch detection time (for example, 8:45 am), the current heart rate trajectory 412 may be set as "previous heart rate trajectory". When 12 a hr period elapses from the first touch detection time (for example, 8:45 am), the control unit 110 may display the new current heart rate trajectory (not shown) on the first heartbeat screen 410.

In operation S340 of FIG. 3, when the calculated biometric information is displayed along one of an hour hand and a minute hand, a screen displaying method of a portable device is terminated.

As illustrated in FIGS. 4G and 4I, a heart rate trajectory corresponding to the second biometric signal detection mode may be displayed different from the display of a heart rate trajectory corresponding to the first biometric signal detection mode of FIGS. 4C and 4F.

In operation S330 shown in FIG. 3, a biometric signal detection mode is checked.

The control unit 110 may check the biometric signal detection mode (for example, the second biometric signal detection mode) stored in response to the first touch 500. The control unit 110 may determine the biometric signal detection mode stored in response to the first touch 500. Additionally, the control unit 110 may read the biometric signal detection mode stored in response to the first touch 500.

Since the checking of the second biometric signal detection mode is identical to the checking of the first biometric signal detection mode, its overlapping description is omitted.

In operation S340 in FIG. 3, the calculated biometric information is displayed along one of an hour hand and a minute hand.

Referring to FIGS. 4G and 4I, the control unit 110 (shown in FIG. 2) may display the calculated biometric information on the second heartbeat screen 420 along one of an hour hand and a minute hand in relation to the biometric signal detection mode (for example, the second biometric signal detection mode). The control unit 110 may display the calculated biometric information as one of an hour hand trajectory and a minute hand trajectory in relation to the second biometric signal detection mode. The heart rate trajectory may be displayed by a curved line 421 (see FIG. 4H) or a broken line 422 (see FIG. 4I). The trajectory may be displayed one line. Additionally, the trajectory may be displayed by a non-continuous curved line or a non-continuous unbroken line.

The control unit 110 may display a date 420a and/or a heart rate 420b (for example, 78 bpm) on the second heartbeat screen 420 based on or in relation to a detection time (for example, 8:35 am) of the first touch 500. The positions of the date 420a and/or the heart rate 420b may be changed on the second heartbeat screen 420. For example, the control unit may display the date 420a and/or the heart rate 420b at the positions not hidden by an hour hand or a minute hand on the second heartbeat screen 420.

The control unit 110 may display a start point (not shown) of the heart rate trajectory 421 based on or in relation to a detection time (for example, 8:35 am) of the first touch 500.

Referring to FIG. 4H. the position of the heart rate trajectory 421 based on or in relation to the center c of the portable device 100 may be a heart rate calculated periodically (for example, 1 min). For example, the position of the heart rate trajectory 421 based on or in relation to the center c of the portable device 100 at 8:35 am, that is, the current time, is a heart rate (for example, 92 bpm) calculated at 8:35 am, that is, the current time.

Referring to FIGS. 4H and 4I, the control unit 100 may change the position of the trajectory 421 displayed on the second heartbeat screen 420 by using the calculated maximum and minimum heart rates. The control unit 100 may change the vertical axis values (for example, 65, 85, 100, and 110) of the first heartbeat screen 410 by using the calculated maximum and minimum heart rates.

The control unit 100 may divide the second heartbeat screen 420 into a plurality of areas by using the calculated maximum and minimum heart rates. For example, when the maximum heart rate is 95, on the basis of the center c of the portable device 100, the maximum display heart rate may be 110 by setting + 10% (subject to change) of the maximum heart rate.

The control unit 110 may set the center c of the portable device 100 to a heart rate of 50 by using the minimum heart rate. When the calculated minimum heart rate is 50, the control unit 110 may set the center c of the portable device 100 to a heart rate of 45.

The control unit 110 may change the trajectory 421 on the second heartbeat screen 420 by using user information (for example, name, sex, age, and so on) of a user who wears the portable device 100. Additionally, the control unit 100 may change the vertical axis values (for example, 65, 85, 100, and 110) of the second heartbeat screen 420 by using the user information of a user who wears the portable device 100.

The control unit 110 may or may not display heart rate lines 421a, 421b, or 411c. Additionally, the control unit 100 may or may not display the vertical axis values (for example, 65, 85, 100, and 110) corresponding to the heart rate lines 421a, 421b, or 421c on the second heartbeat screen 420.

Referring to FIG. 4H, a style of the heart rate trajectory 421 (for example, the color of a trajectory, the width of a trajectory, a dash type of a trajectory, and so on) may be changed. The color of the heart rate trajectory 421 may indicate a user's state. A heart rate database (for example, a sex-specific heart rate, an age-specific heart rate, and an exercise intensity-specific heart rate) may be stored in the storage unit 175.

The control unit 110 (shown in FIG. 2) may compare a periodically-calculated heart rate with a stored heart rate database. According to a comparison result, the control unit 110 may change the color of the heart rate trajectory 421. For example, when the calculated heart rate is within a normal range, the control unit 110 may display the color of the trajectory 421 corresponding to a heart rate detection time as white color. When the calculated heart rate is within an abnormal range, the control unit 110 may display the color of the trajectory 421 corresponding to a heart rate detection time as red color. Additionally, when the calculated heart rate is within an abnormal range, the control unit 110 may change the thickness (for example, one pixel -> two pixels) of the heart rate trajectory 421 and/or a dash type (for example, a solid line -> a broken line).

The control unit 110 may provide a feedback corresponding to the display of a trajectory corresponding to biometric information to a user. The provided feedback may be provided as one of visual feedback, auditory feedback, and tactile feedback. Additionally, the control unit 110 may provide a combination of visual feedback, auditory feedback, and tactile feedback to a user.

Referring to FIG. 4I, the control unit 110 displays the heart rate trajectory 422 corresponding to a periodically-calculated heart rate on the second heartbeat screen 420'. The heart rate trajectory 422 is increased by an elapsed time in comparison to FIG. 4H. The heart rate trajectory may be displayed by the curved line 421 (see FIG. 4H) or the broken line 422 (see FIG. 4I). Except for a heart rate trajectory difference (for example, the curved line 421 and the broken line 422), the heart rates are the same.

The control unit 110 may display the heart rate trajectory 421 corresponding to a heart rate that is periodically calculated from a detection time (for example, 8:35 am) of the first touch 500 to the current time (for example, 7:55 pm). The calculated heart rate 420c may be displayed adjacent to one of an hour hand and a minute hand. The calculated heart rate 420c may include a text (for example, bpm) or a symbol (for example, a heart) in addition to a number. The symbol is an icon or an animation.

When a 12 hr period elapses from the first touch detection time (for example, 8:45 am), the heart rate trajectory 422 may be connected to the start position of the trajectory 422 corresponding to the first touch detection time (for example, 8:45 am). When the current heart rate trajectory 422 forms a closed curve, the control unit 110 may make the previous heat rate trajectory disappear. The control unit 110 may or may not display heart trajectory lines 421a, 421b, or 411 c, shown in FIG. 4I.

When a 12 hr period elapses from the first touch detection time (for example, 8:45 am), the control unit 110 may display the new current heart rate trajectory (not shown) on the second heartbeat screen 420.

In operation S340 shown in FIG. 3, when the calculated biometric information is displayed along one of an hour hand and a minute hand, a screen displaying method of a portable device is terminated.

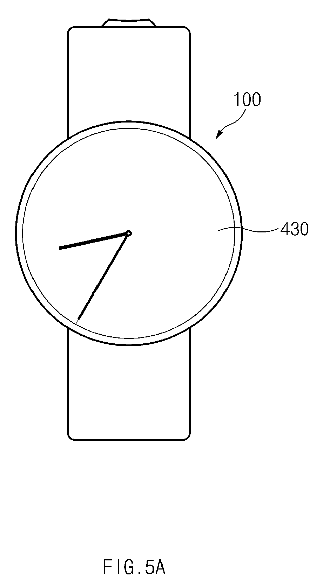

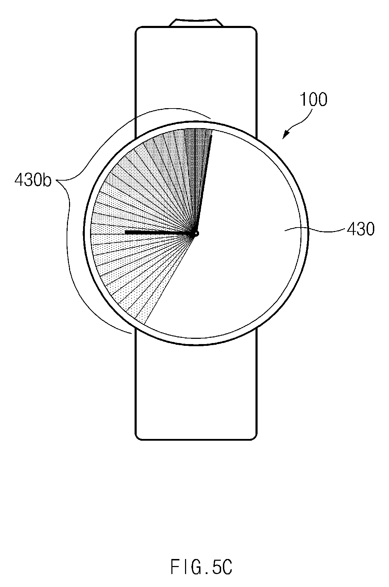

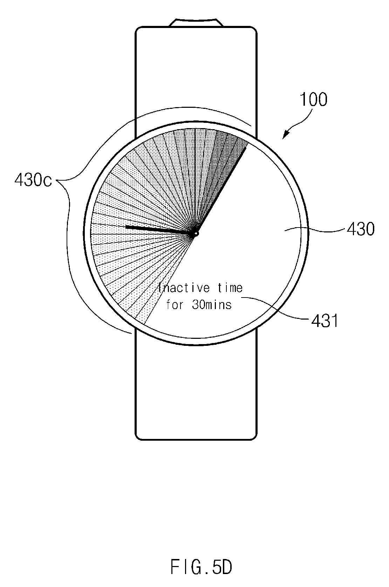

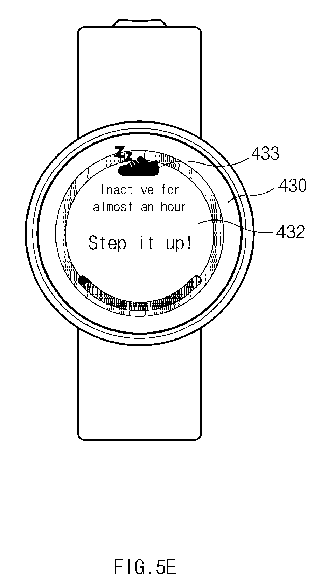

FIGS. 5A, 5B, 5C, 5D, and 5E are views illustrating a screen example of a portable device according to various embodiments of the present disclosure.

In operation S310 shown in FIG. 3, a touch is detected from a screen of a wearable device.

Referring to FIGS. 4A and 4B, the home screen 400 of a health application is displayed on the touch screen 190. A shortcut icon (not shown) corresponding to the health application displayed on the touch screen 190 of the portable device 100 may be selected by a user. The control unit 110 may execute the health application based on or in relation to a user selection.

Referring to FIG. 4B, a user performs a first touch 500 on the home screen 400. The control unit 110 may detect the first touch 500 by using the touch screen 190 and the touch screen processor or screen controller 195.

Since the touch detection from a screen of a portable device is substantially similar to the above-mentioned embodiment, overlapping descriptions are omitted.

In operation S320 shown in FIG. 3, a user's biometric signal is detected.

With reference to FIG. 2, the control unit 110 may detect a user's biometric signal (for example, an operation that is one of user's movements) in response to the first touch 500. The acceleration sensor 173 is disposed inside the portable device 100 and is not exposed to the outside. The acceleration sensor 173 may detect an acceleration change by a vibration and/or a movement applied to the portable device 100 by a movement of a user who wears the portable device 100. Additionally, the control unit 110 may detect a user's biometric signal (for example, an operation that is one of user's movements) by using a motion sensor (not shown) in response to the first touch 500.

The control unit 110 may receive biometric signals, which are detected through an additional sensor (not shown) for detecting a movement of a user at the outside, through a communication unit and the connector 165. The storage unit 175 may store biometric signals received from the outside according to a control of the control unit 110.

The control unit 110 may calculate a user's movement by using the received biometric signals (for example, acceleration signals corresponding to a user's movement). The storage unit 175 may store a user movement calculated according to a control of a control unit.

The control unit 110 may detect a temperature, a barometric pressure, an altitude, or an illumination in addition to a user biometric signal by using the sensor 170. The control unit 110 may detect the battery remaining amount, data usage amount, message reception/transmission number, or communication connection state (for example, mobile communication or short-range communication) of the portable device 100.

In operation S330 shown in FIG. 3, a biometric signal detection mode is checked.

The health application may include a plurality of biometric signal detection modes. The health application may include a first biometric signal detection mode for detecting a user's biometric signal in a 1 min period and a second biometric signal detection mode for detecting a user's biometric signal in a shorter period (for example, 10 sec) than the first biometric signal detection mode. Additionally, the health application may include a third biometric signal detection mode for detecting a user's biometric signal only once. There may be only one biometric signal detection mode (for example, only the first biometric signal detection mode).

A detection period of the first biometric signal detection mode and/or a detection period of the second biometric signal detection mode may be changed through a setting (for example, manufacturer setting or user setting). For example, a detection period of the first biometric signal detection mode may be set to 2 min, 5 min, or another period. Additionally, a detection period of the second biometric signal detection mode may be set to 20 sec, 15 sec, 30 sec, or another period.

A biometric signal detection mode may be selected by a user (or a manufacturer) in the setting (not shown) of the health application. The selected biometric signal detection mode may be stored as the first biometric signal detection mode information in the storage unit 175 (shown in FIG. 2) according to a control of the control unit 110. One (for example, the first biometric signal detection mode) selected from a plurality of biometric signal detection modes may be stored as the default biometric signal detection mode according to a control of the control unit 110.

The stored first biometric signal detection mode may include an ID for history management, a selected biometric signal detection mode (for example, the first to third biometric signal detection modes), or a biometric signal detection signal selection time.

The first biometric signal detection mode information may be stored as the setting of the health application or stored as an additional file in the storage unit 175.

The control unit 110 (shown in FIG. 2) may check the biometric signal detection mode (for example, the first biometric signal detection mode) stored in response to the first touch 500. The control unit 110 may determine the biometric signal detection mode stored in response to the first touch 500. Additionally, the control unit 110 may read the biometric signal detection mode stored in response to the first touch 500.

The checking of the biometric signal detection mode in operation S330 shown in FIG. 3 may be omitted. For example, if there is no biometric signal detection mode in the portable device 100, the control unit 110 may proceed to operation S340 without performing operation S330 shown in FIG. 3. Additionally, if there is one biometric signal detection mode in the portable device 100, the control unit 110 may proceed to operation S340 without performing operation S330 of FIG. 3.

In operation S340 shown in FIG. 3, the calculated biometric information is displayed along one of an hour hand and a minute hand.

Referring to FIGSS. 5A, 5B, 5C, 5D and 5E, the control unit 110 may display the calculated biometric information on the movement screen 430 along one of an hour hand and a minute hand in relation to the biometric signal detection mode (for example, the first biometric signal detection mode). For example, the calculated biometric information may be displayed along a minute hand.

Referring to FIGS. 5B and 5C, the control unit 110 may display the calculated biometric information (for example, an inactive time) the minute hand trajectory 430a on the movement screen 430 based on or in relation to the first biometric signal detection mode. The trajectory 430a may be displayed as a shaded area divided by 1 min unit. The trajectory 430a may be displayed as being divided by 2 min, 3 min, 4 min, or 5 min unit in addition to 1 min unit.

An area divided by 1 min unit may be a time section where there is no user's movement (for example, an operation) based on or in relation to the center c of the portable device 100. The control unit 100 may display black color in the gradation (for example, white color -> gray color -> black color) of a shadow on the movement screen 430 when there is no user's movement for more than 20 min. The control unit 110 may display the gradation of a shaded area adjacent to a minute hand (for example, - 5 min based on or in relation to the time of a minute hand) in black color. An adjacent time (for example, -5 min) may be changed.

When a time (for example, an inactive time) for which there is no user's movement is increased, the shaded area 430b of the movement screen 430 may be increased (for example, 430a -> 430b).

The control unit 110 (shown in FIG. 1) may display the detected temperature, barometer pressure, altitude, or illumination in addition to biometric information along a minute hand trajectory. Additionally, the control unit 110 may display the battery remaining amount, data usage amount, message reception/transmission number, or communication connection state (for example, mobile communication or short-range communication) of the portable device 100, along a minute hand trajectory.

The control unit 110 may provide a feedback corresponding to the display of a trajectory corresponding to biometric information to a user. The provided feedback may be provided as one of visual feedback, auditory feedback, and tactile feedback. Additionally, the control unit 110 may provide a combination of visual feedback, auditory feedback, and tactile feedback to a user.

Referring to FIG. 5D, if there is no user's movement for more than 30 min (for example, an active time is more than 30 min), the control unit 110 may increase the shaded area 430c of the movement screen 430 and display it. The control unit 110 may display a text 431 (for example, "inactive time for 30 min") at the lower end of the movement screen 430. Additionally, the control unit 110 may display a symbol (not shown) instead of a text at the lower end of the movement screen 430. The symbol (not shown) may include an icon or an animation.

Referring to FIG. 5E, if a time (for example, 1 hr) set for a user's movement arrives, the control unit 110 may make an hour hand and a minute hand disappear on the movement screen 430. The control unit 110 may display a notification message 432 on the movement screen 320. The notification message 432 may include a text (for example, "inactive for almost an hour" or "step it up!") or a symbol 433 (for example, shoes). The symbol 433 may include an icon or an animation.

In operation S340 shown in FIG. 3, when the calculated biometric information is displayed along one of an hour hand and a minute hand, a screen displaying method of a portable device is terminated.

According to various embodiments of the present disclosure, a portable device for displaying biometric information, which is calculated by using biometric signals detected through a sensor, as a trajectory along one of an hour hand and a minute hand according to a user input in a wearable portable device and a screen displaying method thereof is provided.

According to various embodiments of the present disclosure, a portable device for displaying biometric information, which is calculated by using biometric signals received from an external source or the outside, as a trajectory along one of an hour hand and a minute hand according to a user input in a wearable portable device and a screen displaying method thereof is provided.

According to various embodiments of the present disclosure, a portable device for displaying biometric information received from the outside as a trajectory along one of an hour hand and a minute hand according to a user input in a wearable portable device and a screen displaying method thereof is provided.

The present disclosure is not limited thereto and according to various embodiments of the present disclosure, a portable device for displaying biometric information calculated or received by a wearable portable device as a time trajectory and a screen displaying method thereof is provided.

Methods according to an embodiment of the present disclosure may be implemented in a program instruction form to be performed through various computer means and may be stored in a computer readable medium. The computer readable medium may include program instructions, data files, and data structures separately or a combination thereof. For example, the computer readable medium may include a volatile or nonvolatile storage device (for example, a storage device such as ROM) regardless of a delete function or a rewrite function, a memory (for example, RAM, a memory chip, or a device or integrated circuit), or a storage medium optically or magnetically recordable and readable by a machine (for example, a computer) at the same time (for example, compact disc (CD), digital versatile disc (DVD), magnetic disk, or magnetic tape).

It may be understood that memory included in a portable device is one example of a storage medium readable by a machine appropriate for storing a program or programs including instructions for implementing embodiments of the present disclosure. It may be understood that program instructions stored in the medium are specially designed and configured for the present disclosure or are well known to those skilled in computer software and used.

While the present disclosure has been shown and described with reference to the various embodiments thereof, it will be understood by those skilled in the art that various changes in form and details may be made therein without departing from the spirit and scope of the present disclosure as defined by the appended claims and their equivalents.

## Claims

1. A portable device comprising:
a touch screen;
a sensor configured for detecting a biometric signal; and
a processor configured to control for:
displaying, on the touch screen, biometric information having a trajectory along one of an hour hand and a minute hand, and
wherein the biometric information is obtained based on the biometric signal in response to a touch detected from the touch screen.

2. The portable device of claim 1, wherein the biometric signal comprises one of a heart rate, an electrocardiogram, and a user movement.

3. The portable device of claim 2, wherein, when the biometric signal is a heart rate, the processor is further configured to control for detecting the heart rate through an external heartbeat sensor.

4. The portable device of claim 3, wherein the processor is further configured to control for detecting the biometric signal in a set period.

5. The portable device of claim 3, wherein the processor is further configured to control for displaying the trajectory corresponding to the biometric information at a position spaced in relation to a center of the touch screen.

6. The portable device of claim 3, wherein the processor is further configured to control for:
displaying the trajectory corresponding to the biometric information as a first trajectory, and
displaying a second trajectory calculated before the first trajectory simultaneously with the first trajectory.

7. The portable device of claim 3, wherein the processor is further configured to control for displaying a heart rate corresponding to the biometric information as one of a text and a symbol to be adjacent to the trajectory.

8. The portable device of claim 2, wherein, when the biometric signal is based on a user movement, the processor is further configured to control for detecting a user movement through one of an acceleration sensor and a motion sensor.

9. The portable device of claim 8, wherein the processor is further configured to control for detecting the biometric signal in a set period.

10. The portable device of claim 9, wherein the processor is further configured to control for displaying the trajectory corresponding to the biometric information as a shaded area in relation to a center of the touch screen according to the set period.

11. The portable device of claim 10, wherein, when an inactive time is increased in the trajectory, the processor is further configured to control for displaying a text corresponding to the increase in the inactive time to be adjacent to one of the hour hand and the minute hand.

12. The portable device of claim 10, wherein, when an inactive time is increased in the trajectory, the processor is further configured to control for displaying a notification message corresponding to the increase of the inactive time.

13. A method for displaying a screen in a portable device, the method comprising:
detecting a user input from a touch screen;
detecting a user's biometric signal through a sensor in response to the user input; and
displaying biometric information corresponding to the biometric signal,
wherein the biometric information includes a trajectory along one of an hour hand and a minute hand on the touch screen, and
wherein the trajectory connects each position spaced in relation to a rotation center of the hour hand and the minute hand.

14. The method of claim 13, wherein, when the biometric signal comprises a heartbeat, the biometric signal is detected by a heartbeat sensor included in the sensor.

15. The method of claim 13, wherein when the biometric signal is based on a user movement, the biometric signal is detected by one of an acceleration sensor and a motion sensor in the sensor.
